# EUROPÄISCHE PATENTSCHRIFT

(11) **EP 2 213 893 B1**
(45) Veröffentlichungstag und Bekanntmachung des Hinweises auf die Patenterteilung: **17.06.2020**
(21) Anmeldenummer: 10000651.9
(22) Anmeldetag: 22.01.2010
(51) Int. Cl.: F16C 33/46

(54) **Aus mehreren Teilen aufgebauter Wälzlagerkäfig**
Roller bearing cage made of a plurality of parts
Cage de palier de roulement constitué d'une pluralité d'éléments

(30) Priorität: 30.01.2009 DE 102009006859
(43) Veröffentlichungstag der Anmeldung: 04.08.2010
(73) Patentinhaber: Aktiebolaget SKF, 415 50 Göteborg (SE)
(72) Erfinder: Beyfuss, Berthold, 97535 Kaisten (DE); Radina, Alfred, 97711 Massbach (DE); Friedrich, Hans-Jürgen, 97486 Königsberg (DE); Schierling, Jonas, 97437 Hassfurt (DE)
(74) Vertreter: Schonecke, Mitja

(56) Entgegenhaltungen:
- WO-A2-2009/056310
- DE-A1-102007 020 113
- GB-A- 1 154 797
- US-A- 1 147 497
- US-A- 1 250 595
- US-A- 1 611 976
- US-A- 1 966 266
- US-A- 3 087 762
- US-A- 3 205 029
- US-A- 3 284 146

## Beschreibung

Die Erfindung betrifft einen Wälzlagerkäfig.

Beispielsweise aus der DE 79 35 982 U1 ist ein Wälzlagerkäfig bekannt, der aus zwei Seitenteilen und einer Vielzahl von getrennt gefertigten und durch Schweißen oder dgl. mit den Seitenteilen verbundenen Stegteilen besteht, wobei die Stegteile zwischen sich Taschen zur Aufnahme der Wälzkörper bilden. Dabei sind die Seiten- und Stegteile aus flach- oder profilgewalztem Draht gefertigt und die Stegteile zur Bildung von Anlaufflächen für die Wälzkörper angeprägt.

Weitere mehrteilige Wälzlagerkäfige sind auch aus der US 1 966 266 A, der US 1 147 497 A, der GB 1 154 797 A, der US 1 611 976 A, der US 1 250 595 A und der US 3 284 146 A bekannt.

Eine Aufgabe der vorliegenden Erfindung ist es, einen verbesserten Wälzlagerkäfig zu schaffen, der insbesondere einfach und damit kostengünstig herstellbar ist.

Die Aufgabe wird durch den Gegenstand des Anspruchs 1 gelöst. Vorteilhafte Ausgestaltungen sind in den Unteransprüchen beschrieben.

Gemäß Patentanspruch 1 umfasst ein Wälzlagerkäfig eines Wälzlagers folgende Merkmale:
- Der Käfig umfasst ein ringartiges Umfangselement von dem Stegelemente abzweigen, zwischen den Wälzkörper des Wälzlagers anordenbar sind,
- das Umfangselement umfasst eine Mehrzahl gleichartiger Sektorelemente,
- jedes der Sektorelemente weist wenigstens eine Ausformung auf, die mit wenigstens einer korrespondierenden seitlichen Ausnehmung eines der Wälzkörper lose in Eingriff bringbar ist,
- die zunächst losen Sektor- und Stegelemente sind zum Bilden des Käfigs miteinander verbunden und
- die zunächst losen Sektorelemente sind an ihren Verbindungsstellen derart ausgebildet, dass sich bei Zusammenführen zweier Sektorelemente an ihnen eine Durchdringung ergibt, die zum darin Einsetzen eines Endes eines der Stegelemente vorgesehen ist.

Durch den sektorisierten Aufbau des Wälzlagerkäfigs lassen sich die Einzelteile besonders kostengünstig per Massenproduktion herstellen. Die Sektorelemente sind beispielsweise einfach und kostengünstig durch Ablängen von einem entsprechend profilierten Stangen- oder Bandmaterial aus Stahl oder Kunststoff herstellbar. Im Vergleich zu aus einem hohlzylinderartigen Rohling herausgearbeiteten bekannten Wälzlagerkäfigen bietet dies den Vorteil, dass nahezu kein Materialabfall durch das Herausarbeiten entsteht und sich somit mit Vorteil eine Materialeinsparung gegenüber bekannten Verfahren zur Herstellung von Wälzlagerkäfigen ergibt. Durch die Ausbildung der Ausformungen an den Sektorelementen ist es auf besonders einfache Weise möglich, einen verliersicheren Käfig zu erzeugen, in dem beispielsweise Zylinderrollen bei der Montage des Käfigs mit den Lagerringen zu einem Wälzlager sicher gehalten sind.

Die Sektorelemente sind an ihrem Ende mit einer Ausnehmung versehen, die bei Zusammenführen zweier Sektorelemente die Durchdringung bildet. Derartige Ausnehmungen an den Sektorelementen sind fertigungstechnisch besonders einfach zu realisieren. Besonders vorteilhaft an der Ausbildung der Durchdringung zur Einführung der Stegelemente ist, dass sich derart eine besonders einfache und stabile Verbindung der Stegelemente und der Sektorelemente untereinander ergibt.

In einer vorteilhaften Ausführungsform der Erfindung ist die Durchdringung V-förmig, U-förmig oder trapezförmig mit geraden, konvexen oder konkaven Schenkeln ausgebildet. Derartige Ausgestaltungen der Durchdringung erhöhen die Stabilität der Verbindung zwischen den Stegelementen und den Sektorelementen. In vorteilhafter Weise können die Durchdringung und die daran angepasste Form der Enden der Stegelemente derart ausgebildet sein, dass sie eine in sich stabile und haltfähige Verbindung ermöglichen.

In einer weiteren vorteilhaften Ausgestaltung der Erfindung sind die Sektorelemente derart ausgebildet, dass zwischen dem eingesetzten Ende des jeweiligen Stegelements und den Sektorelementen jeweils ein Spalt besteht, der mit einem die Sektorelemente und die Stegelemente verbindenden Material verfüllt ist. In dieser Ausführungsform lassen sich auch einfachere Geometrien der Durchdringung und des entsprechenden Endes der Stegelemente zu einer stabilen Verbindung zwischen den Stegelementen und den Sektorelementen nutzen.

In einer vorteilhaften Ausführungsform der Erfindung ist das Material zum Verbinden der Stegelemente und der Sektorelemente ein Kunststoff oder Elastomer. In diesem Fall lassen sich beispielsweise die Sektorelemente und die Stegelemente vormontieren, woraufhin die zwischen den jeweiligen Stegelementen und den angrenzenden Sektorelementen gebildeten Spalte in einem Spritzwerkzeug positioniert werden, woraufhin der Spalt jeweils mit Kunststoff oder Elastomer verfüllt wird. Die Zulassung des Spalts zwischen den Sektorelementen und den Stegelementen und des nachträglichen Verfüllens mit einem verklebenden Material ermöglicht insbesondere das Zulassen größerer Fertigungstoleranzen, wodurch die Produktion zusätzlich vereinfacht wird.

Vorteilhaft ist eine Ausgestaltung der Erfindung derart, dass die Stegelemente endseitig angeordnete Ausnehmungen aufweisen, durch die eine stabile Verbindung mit dem Material ermöglicht wird. So können die Stegelemente vor ihrem Ende, auf der in den Sektorelementen steckenden Fläche jeweils mit Kerben oder Einbuchtungen versehen sein, die nach dem Einspritzen des Kunststoffes oder Elastomers für eine formschlüssige Verbindung und eine hohe axiale Festigkeit sorgen.

Weitere Vorteile, Merkmale und Einzelheiten der Erfindung ergeben sich aus den im Folgenden beschriebenen Ausführungsbeispielen der Erfindung anhand der Figuren. Dabei zeigen:
- Figur 1: in perspektivischer Ansicht einen aus Elementen zusammengesetzten Zylinderrollenlagerkäfig und
- Figur 2: in perspektivischer Ansicht einen weiteren aus Elementen zusammengesetzten Zylinderrollenlagerkäfig.

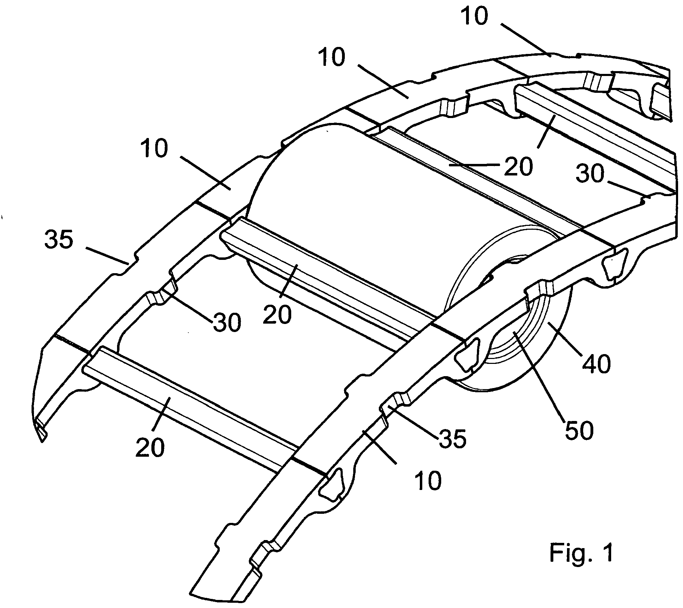

Die Figur 1 zeigt als ein Ausführungsbeispiel der Erfindung einen aus Elementen 10 und 20 zusammengesetzten Zylinderrollenlagerkäfig. Der Zylinderrollenlagerkäfig umfasst dabei an seinen beiden axialen Enden je ein ringartiges Umfangselement und eine Vielzahl, die beiden Umfangselemente miteinander verbindende Stegelemente 20. Dabei sind die Sektorelemente 10 einfach und kostengünstig durch Ablängen von einem entsprechend profilierten Stangen- oder Bandmaterial aus Stahl hergestellt.

Auch die Stegelemente 20 sind in einfacher und kostengünstiger Weise durch ein Ablängen von einem entsprechend profilierten Stangen- oder Bandmaterial aus Stahl hergestellt. Dabei sind insbesondere die dem Außenmantel der Zylinderrollen zum Gegenüberliegen vorgesehenen Seitenflächen der Stegelemente 20 entsprechend dem Rollenaußenmantel bogenartig ausgebildet, was mit besonderem Vorteil den Schmierfilmaufbau begünstigt.

Die Sektorelemente 10 sind an ihren Verbindungsstellen derart ausgebildet, dass sich an der Verbindungsstelle in radialer Richtung eine V-förmige Einbauchung ergibt, in die hinein passend die axialen Enden der Stegelemente 20 zum Einsetzen vorgesehen sind, so dass die Positionen der Stegelemente 10 an den Umfangselementen in Umfangsrichtung vorbestimmt sind. Die einzelnen Elemente 10 und 20 sind untereinander dann stoffschlüssig, insbesondere durch ein Schweißen miteinander verbunden. Dieses Verschweißen kann beispielsweise mit einem Laser-, Elektronen- oder Plasma-Verfahren erfolgen. In anderen Ausführungsformen können die Elemente 10 und 20 auch miteinander verlötet, beispielsweise durch ein induktives Hartlöten oder Laserhartlöten, oder auch miteinander verklebt sein.

Dabei bildet jedes der Sektorelemente 10 in den Bereichen, in dem es mit den beiden benachbarten Sektorelementen 10 verbunden ist, eine potentielle Anlauffläche für eine Rollenstirnseite, die bezüglich der übrigen Stirnfläche des Sektorelements 10 radial weiter innen angeordnet ist, so dass sich in radialer Richtung gesehen für die Rollenstirnseite eine radial möglichst weit erstreckende potentielle Anlauffläche ergibt, was mit besonderem Vorteil einen zusätzlichen Verkippschutz für die Zylinderrollen darstellt. Diese größere radiale Erstreckung wenigstens in Bereichen der Umfangselemente ist mit dem aus Elementen 10 und 20 zusammengesetzten Käfig mit besonderem Vorteil unabhängig von der radialen Dicke der Stegelemente 20 erzielbar. Damit ist mit Vorteil auch eine vergleichsweise große Anbindefläche für die axialen Enden der Stegelemente 20 an den Sektorelementen 10 erzielbar.

Beim Zylinderrollenlagerkäfig der Figur 1 können die einzelnen Elemente 10 und 20 zunächst miteinander verbunden werden und dann der Käfig durch Einsetzen von Rollen zu einem entsprechenden Zylinderrollenlager zusammengebaut werden. Es ist aber auch möglich, insbesondere in Verbindung mit einem Laufbahnelement, mit Borden an beiden Enden der Zylinderrollenstirnseiten, die Elemente 10 und 20 um die in besagtes Laufbahnelement eingelegten Rollen anzuordnen und dann zu verbinden, so dass das Laufbahnelement mit den Zylinderrollen und dem Käfig eine in sich verliersichere Einheit bildet.

In wiederum anderen Ausführungen ist eine Ausbildung der Elemente 10 und 20 auch aus anderen Materialien, beispielsweise anderen metallischen Legierungen, aber auch Kunststoffen, und deren Herstellung durch Sintern und/oder Spritzgießen möglich. Weiterhin kann auch ein Kegelrollenlagerkäfig vergleichbar dem vorausgehend beschriebenen Zylinderrollenlagerkäfig ausgebildet sein, wobei sich dabei lediglich die beiden Umfangselemente in ihrem Durchmesser unterscheiden und somit zwei Arten von Sektorelementen vorzusehen sind.

Dadurch, dass der Käfig der Figur 1 einen im Wesentlichen glatten Außenmantel aufweist, ist er insbesondere als ein, beispielsweise an einem entsprechend ausgebildeten, äußeren Laufbahnelement schultergeführter Käfig einsetzbar. Dabei sind mit besonderem Vorteil die Stegelemente 20 radial nach außen hin dann durch die Schulter des äußeren Laufbahnelements zusätzlich, sozusagen mechanisch gesichert, wohingegen die Stegelemente 20 radial nach innen hin durch die aus den Sektorelementen 10 zusammengesetzten Umfangselemente gehalten sind.

Jedes der Sektorelemente 10 weist eine parallel zu den Stegelementen 20 angeordnete Ausformung 30 auf. Diese Ausformungen 30 können bei der Verwendung von stahlartigen Materialien für die Herstellung der Sektorelemente 10 beispielsweise durch Ausprägen erzeugt werden. Alternativ ist es möglich, beim Ablängen der Sektorelemente 10 aus stangenartig vorgeformtem Material die Ausformungen 30 mit zu erzeugen. In diesen Fällen weist jedes der Sektorelemente 10 eine der jeweiligen Ausformung 30 gegenüberliegende Ausnehmung 35 auf. Bei dieser Herstellungsmethode ist der Fertigungsaufwand besonders gering. Bei der Ausführung der Sektorelemente 10 aus Kunststoff lassen sich die Ausformungen 30 direkt bei der Herstellung, beispielsweise im Spritzgussverfahren erzeugen.

Zur Verdeutlichung der Funktion der Ausformungen 30 der Stegelemente 20 ist eine Zylinderrolle 40 dargestellt, die in einer durch zwei der Stegelemente 20 und der Sektorelemente 10 gebildeten Tasche des Zylinderrollenlagerkäfigs angeordnet ist. Die Zylinderrolle 40 weist endseitige Ausnehmungen 50 auf, in die jeweils eine der Ausformungen 30 lose in Eingriff gebracht ist. Durch das Zusammenspiel der Ausformungen 30 und der Ausnehmungen 50 ergibt sich eine verliersichere Halterung der Zylinderrolle 40 im montierten Zylinderrollenlagerkäfig. Beim späteren Einbau des so bestückten Zylinderrollenlagerkäfigs kann auf eine Montagehülse verzichtet werden, da sämtliche Zylinderrollen 40 verliersicher im Käfig vormontiert sind.

Die Seitenflächen der Stegelemente 20 sind derart konisch geformt, dass eine Anlauffläche für die Zylinderrollen 40 entsteht.

In einer alternativen Ausführungsform ist es beispielsweise möglich, dass zwei oder mehr der Sektorelemente 10 einstückig ausgebildet sind.

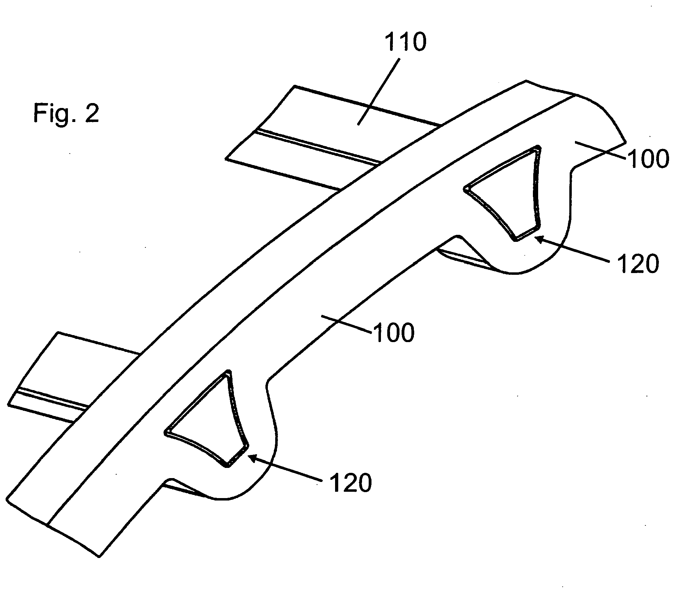

In der Figur 2 ist ein alternatives Ausführungsbeispiel der Erfindung dargestellt. Der entsprechende Zylinderrollenlagerkäfig ist in Umlaufrichtung aus Sektorelementen 100 zusammengesetzt. Jeweils zwei der Sektorelemente 100 bilden an ihrer Verbindungsstelle eine Durchdringung 120. Stegelemente 110 sind endseitig derart geformt, dass sie in die Durchdringung 120 zwischen jeweils zwei der Sektorelemente 100 einbringbar sind. Die Maße der Endseiten der Stegelemente 110 sind derart gewählt, dass zwischen der Innenwand der Durchdringung 120 und den Stegelementen 110 ein schmaler Spalt entsteht. Zur endgültigen Montage werden die jeweiligen Komponenten vormontiert und in einem Spritzwerkzeug positioniert. Daraufhin werden die in der Durchdringung entstandenen Spalte mittels Kunststoff, Elastomer oder Klebstoff ausgespritzt. Im Fall der Verwendung von Kunststoff oder Elastomer ist der Spalt bevorzugt etwa ein bis zwei Millimeter breit. Bei der Verwendung von Klebstoff ist es auch möglich, eine Spaltbreite im Bereich einiger Zehntel Millimeter zu wählen.

Vorteilhaft ist eine Ausgestaltung der Stegelemente 110 derart, dass bei den in die Durchdringung 120 eingreifenden Außenflächen der Stegelemente 110 Kerben oder Einbuchtungen vorgesehen sind. Diese Kerben oder Einbuchtungen ergeben nach dem Einspritzen des Kunststoffs in die Spalte eine formschlüssige Verbindung und erhöhen die axiale Festigkeit. Durch die Verbindung der Sektorelemente 100 und der Stegelemente 110 mittels des Kunststoffs oder Elastomers ergibt sich insbesondere die Möglichkeit, sowohl die Stegelemente 110 als auch die Sektorelemente 100 mit größerer Fertigungstoleranz herzustellen. Es ist für den endgültigen Montageprozess unerheblich, ob der Spalt um wenige Zehntel Millimeter größer oder kleiner ist, oder ob dessen Dicke in einer der Durchdringungen 120 leicht schwankt. Bei ungleichmäßig groß ausgebildeten Spalten wird einfach etwas mehr Kunststoff oder Elastomer verwendet, um das jeweilige Stegelement 110 mit den angrenzenden Sektorelementen 100 zu verbinden. Durch die Verwendung des Kunststoffs oder Elastomers zur Verbindung der Stegelemente 110 und der Sektorelemente 100 ergibt sich zusätzlich der Vorteil, dass die Verbindung flexibel ist. Dies bewirkt zum Einen eine Schwingungsreduktion durch eine Dämpfung der Verbindung zwischen Stegelement 110 und Sektorelementen 100. Insgesamt lässt sich dadurch eine Geräuschreduzierung bei Einsatz des Wälzlagerkäfigs erzielen.

### Bezugszeichenliste

- 10: Sektorelemente
- 20: Stegelemente
- 30: Ausformung
- 35: gegenüberliegende Ausnehmung
- 40: Zylinderrolle
- 50: einseitige Ausnehmung

- 100: Sektorelemente
- 110: Stegelemente
- 120: Durchdringung

## Patentansprüche

1. Wälzlagerkäfig eines Wälzlagers, beinhaltend folgende Merkmale:
- Der Käfig umfasst ein ringartiges Umfangselement von dem Stegelemente (20) abzweigen, zwischen denen Wälzkörper des Wälzlagers anordbar sind,
- das Umfangselement umfasst eine Mehrzahl gleichartiger Sektorelemente (10),
- jedes der Sektorelemente (10) weist wenigstens eine Ausformung (30) auf, die mit wenigstens einer korrespondierenden seitlichen Ausnehmung (50) eines der Wälzkörper des Wälzlagers lose in Eingriff bringbar ist und
- die zunächst losen Sektor- (10) und Stegelemente (20) sind zum Bilden des Käfigs miteinander verbunden,
**dadurch gekennzeichnet, dass** die zunächst losen Sektorelemente (10) an ihren Verbindungsstellen derart ausgebildet sind, dass sich bei Zusammenführen zweier Sektorelemente (10) an der Verbindungsstelle eine Durchdringung (120) ergibt, die zum darin Einsetzen eines Endes eines der Stegelemente (20) vorgesehen ist.

2. Wälzlagerkäfig nach Anspruch 1, wobei das Umfangselement aus den Sektorelementen (10) gebildet ist.

3. Wälzlagerkäfig nach einem der Ansprüche 1 oder 2, wobei entsprechend der Anzahl von Wälzkörpern Stegelemente (20) und/oder Sektorelemente (10) vorgesehen sind.

4. Wälzlagerkäfig nach einem der Ansprüche 1 bis 3, wobei die Stegelemente (20) gleichartig ausgebildet sind.

5. Wälzlagerkäfig nach einem der Ansprüche 1 bis 4, wobei die Durchdringung (120) V-förmig, U-förmig oder trapezförmig mit geraden, konvexen oder konkaven Schenkeln der V-, U- oder Trapezform ausgebildet ist.

6. Wälzlagerkäfig nach einem der Ansprüche 1 bis 5, wobei die Sektorelemente (10) derart ausgebildet sind, dass zwischen dem eingesetzten Ende des Stegelements (20) und den Sektorelementen (10) jeweils ein Spalt besteht.

7. Wälzlagerkäfig nach Anspruch 6, wobei der Spalt im Bereich zwischen einem zehntel Millimeter und zwei Millimetern breit ist.

8. Wälzlagerkäfig nach einem der Ansprüche 6 oder 7, wobei der Spalt mit einem, das Stegelement (20) mit den Sektorelementen (10) verbindenden Material verfüllt ist.

9. Wälzlagerkäfig nach Anspruch 8, wobei das Material ein Kunststoff oder Elastomer ist.

10. Wälzlagerkäfig nach einem der Ansprüche 8 oder 9, wobei das Stegelement (20) endseitig angeordnete Ausnehmungen aufweist, durch die eine stabile Verbindung mit dem Material ermöglicht wird.

11. Wälzlagerkäfig nach einem der Ansprüche 1 bis 10, wobei der Wälzlagerkäfig als ein Rollenlagerkäfig, insbesondere für ein Zylinder-, Kegel- oder Pendelrollenlager ausgebildet ist.

## Claims

1. Rolling bearing cage of a rolling bearing, comprising the following features:
- the cage comprises an annular circumferential element from which web elements (20) branch off, between which web elements rolling bodies of the rolling bearing can be arranged,
- the circumferential element comprises a multiplicity of identical sector elements (10),
- each of the sector elements (10) has at least one protrusion (30) which can be placed loosely in engagement with at least one corresponding lateral recess (50) in one of the rolling bodies of the rolling bearing, and
- the initially loose sector elements (10) and web elements (20) are connected to one another to form the cage,
**characterized in that** the initially loose sector elements (10) are configured, at the connecting points thereof, in such a way that, when two sector elements (10) are brought together, a through-hole (120) is formed at the connecting point, said through-hole being provided for an end of one of the web elements (20) to be inserted therein.

2. Rolling bearing cage according to Claim 1, wherein the circumferential element is formed of the sector elements (10).

3. Rolling bearing cage according to either of Claims 1 and 2, wherein web elements (20) and/or sector elements (10) are provided correspondingly to the number of rolling bodies.

4. Rolling bearing cage according to one of Claims 1 to 3, wherein the web elements (20) are of identical configuration.

5. Rolling bearing cage according to one of Claims 1 to 4, wherein the through-hole (120) is of V-shaped, U-shaped or trapezoidal configuration with straight, convex or concave limbs of the V shape, U shape or trapezium.

6. Rolling bearing cage according to one of Claims 1 to 5, wherein the sector elements (10) are configured in such a way that a gap is formed in each case between the inserted end of the web element (20) and the sector elements (10).

7. Rolling bearing cage according to Claim 6, wherein the gap has a width in the range of between one tenth of a millimetre and two millimetres.

8. Rolling bearing cage according to either of Claims 6 and 7, wherein the gap is filled with a material which connects the web element (20) to the sector elements (10).

9. Rolling bearing cage according to Claim 8, wherein the material is a plastic or elastomer.

10. Rolling bearing cage according to either of Claims 8 and 9, wherein the web element (20) has recesses which are arranged on the end sides and enable a stable connection to the material.

11. Rolling bearing cage according to one of Claims 1 to 10, wherein the rolling bearing cage is configured as a roller bearing cage, in particular for a cylinder roller bearing, tapered roller bearing or spherical roller bearing.

## Revendications

1. Cage de palier à roulement pour un palier à roulement, comprenant les caractéristiques suivantes :
- la cage comprend un élément périphérique annulaire depuis lequel partent des éléments en forme de nervures (20) entre lesquels peuvent être disposés des corps de roulement du palier à roulement,
- l'élément périphérique comprend une pluralité d'éléments en forme de secteurs identiques (10),
- chacun des éléments en forme de secteurs (10) présente au moins une partie en relief (30) qui peut être amenée en engagement libre avec au moins un évidement latéral correspondant (50) de l'un des corps de roulement du palier à roulement et
- les éléments en forme de secteurs (10) et en forme de nervures (20) initialement libres sont connectés les uns aux autres pour former la cage,
**caractérisée en ce que** les éléments en forme de secteurs (10) initialement libres sont réalisés au niveau de leurs zones de raccordement de manière à ce que, lors de l'assemblage de deux éléments en forme de secteurs (10), il se forme au niveau de la zone de raccordement un passage (120) qui est prévu pour y insérer une extrémité de l'un des éléments en forme de nervures (20).

2. Cage de palier à roulement selon la revendication 1, dans laquelle l'élément périphérique est formé des éléments en forme de secteurs (10).

3. Cage de palier à roulement selon l'une quelconque des revendications 1 et 2, dans laquelle des éléments en forme de nervures (20) et/ou des éléments en forme de secteurs (10) sont prévus de manière correspondant au nombre de corps de roulement.

4. Cage de palier à roulement selon l'une quelconque des revendications 1 à 3, dans laquelle les éléments en forme de nervures (20) sont réalisés de manière identique.

5. Cage de palier à roulement selon l'une quelconque des revendications 1 à 4, dans laquelle le passage (120) est réalisé en forme de V, en forme de U ou en forme de trapèze avec des branches droites convexes ou concaves de la forme en V, en U ou en trapèze.

6. Cage de palier à roulement selon l'une quelconque des revendications 1 à 5, dans laquelle les éléments en forme de secteurs (10) sont réalisés de telle sorte qu'il subsiste dans chaque cas une fente entre l'extrémité insérée de l'élément en forme de nervure (20) et les éléments en forme de secteurs (10).

7. Cage de palier à roulement selon la revendication 6, dans laquelle la fente présente une largeur dans une plage comprise entre un dixième de millimètre et deux millimètres.

8. Cage de palier à roulement selon l'une quelconque des revendications 6 et 7, dans laquelle la fente est remplie avec un matériau liant l'élément en forme de nervure (20) aux éléments en forme de secteurs (10).

9. Cage de palier à roulement selon la revendication 8, dans laquelle le matériau est un plastique ou un élastomère.

10. Cage de palier à roulement selon l'une quelconque des revendications 8 et 9, dans laquelle l'élément en forme de nervures (20) présente des évidements disposés du côté de l'extrémité, qui permettent une liaison stable avec le matériau.

11. Cage de palier à roulement selon l'une quelconque des revendications 1 à 10, la cage de palier à roulement étant réalisée sous forme de cage de palier à rouleaux, en particulier pour un palier à rouleaux cylindriques, à rouleaux coniques ou à rotule sur rouleaux.
